# EUROPEAN PATENT SPECIFICATION

(11) **EP 1 861 964 B1**
(45) Date of publication and mention of the grant of the patent: **23.11.2011**
(21) Application number: 06710531.2
(22) Date of filing: 10.03.2006
(51) Int. Cl.: H04W 76/02, H04W 36/14, H04W 88/06, H04W 92/02

(54) **CALL RE-ESTABLISHMENT VIA ALTERNATIVE ACCESS NETWORK**
VERBINDUNGSWIEDERHERSTELLUNG ÜBER ALTERNATIVE ZUGANGSNETZE
RETABLISSEMENT D'APPEL VIA DES RESEAUX D'ACCES DE REMPLACEMENT

(30) Priority: 15.03.2005 US 661515 P; 19.01.2006 US 334557
(43) Date of publication of application: 05.12.2007
(73) Proprietor: Nokia Corporation, 02150 Espoo (FI)
(72) Inventor: OIKARINEN, Esko, FI-90160 Oulu (FI); DALSGAARD, Lars, FIN-90230 Oulu (FI)
(74) Representative: Ungerer, Olaf
(86) International application number: PCT/IB2006/000530
(87) International publication number: WO 2006/097810

(56) References cited:
- WO-A-2004/036770
- DE-C1- 19 637 437
- US-A- 5 930 712
- US-A1- 2002 049 073
- "UMA Architecture (Stage 2) R1.0.3 (2005-02-28); Technical Specification; Unlicensed Mobile Access (UMA); Architecture (Stage 2)" UMA, [Online] 28 February 2005 (2005-02-28), pages 1-85, XP002387159 Retrieved from the Internet: URL:www.umatechnology.org> [retrieved on 2006-06-23]
- "UMA Protocols (Stage 3) R1.0.3 (2005-02-26); Technical Specification; Unlicensed Mobile Access (UMA); Protocols (Stage 3)" UMA, [Online] 26 February 2005 (2005-02-26), pages 1-156, XP002387160 Retrieved from the Internet: URL:www.umatechnology.org> [retrieved on 2006-06-23]
- NOKIA: "3GPP TSG GERAN Meeting #29; San Jose del Cabo, Mexico, April 24-28, 2006, Cgange Request; Rove-in description alignment with Call Re-Establishment" 3GPP TSG GERAN, [Online] 24 April 2006 (2006-04-24), - 28 April 2006 (2006-04-28) pages 1-6, XP002387161 Retrieved from the Internet: URL:http://www.3gpp.org/ftp/Specs/html-inf o/44318-CRs.htm> [retrieved on 2006-02-23]

## Description

### FIELD OF THE INVENTION

The present invention relates a method and terminal device for re-establishing a call in a data network comprising at least a first access network and a second access network, such as a wireless unlicensed access network, such as an UMAN (Unlicensed Mobile Access Network) or WLAN (Wireless Local Area Network), and a wireless licensed access network, such as a GSM (Global System for Mobile communication), WCDMA (Wideband Code Division Multiple Access) or GPRS (General Packet Radio Services) network.

### BACKGROUND OF THE INVENTION

Unlicensed Mobile Access (UMA) technology enables access to cellular mobile services, e.g. services provided through GSM, WCDMA or GPRS over an unlicensed spectrum, including Bluetooth™ and WiFi™ . The UMA technology enables seamless delivery of mobile voice and data services over unlicensed wireless networks. The same mobile identity is provided on cellular radio access networks and unlicensed wireless networks, so that seamless transitions (e.g. roaming and handover) between these networks is possible.

In GSM systems, a call re-establishment procedure is applied, if possible, if a GSM RR (Radio Resource) connection is going to be lost due to radio link failure. The possibility to use GSM call re-establishment is indicated in an information element (IE) Control Parameters of the Random Access Channel (RACH), which is broadcast to mobile in SYSTEM INFORMATION TYPE 1, 2, 2bis, 3 and 4 messages.
According to the 3GPP (3^{rd} Generation Partnership Project) specification TS 44.018, the GSM call re-establishment procedure may be started after radio link failure is detected during dedicated mode.

When a radio link failure is detected by a mobile station (MS), it performs a local end release on all signalling links unless otherwise specified, and deactivates all dedicated channels. If the mobile station is in dual transfer mode, it aborts the packet resources, and the RR sublayer of the mobile station indicates an RR connection failure to the MM (Mobility Management) sublayer, unless otherwise specified.

It is noted that upper layers may decide on a re-establishment as well. When a MM connection is active, an indication may be given by the MM sublayer to the call control entity to announce that the current MM connection has been interrupted but might be re-established on request of call control. Depending whether call re-establishment is allowed or not and on its actual state, call control decides to either request re-establishment or release the MM connection. If the call is in a call establishment or call clearing phase, i.e. any state other than the "active" state or the "mobile originating modify" state, call control releases the MM connection. On the other hand, if the call is in the "active" state or "mobile originating modify" state, the indication from MM that re-establishment is possible causes call control to request re-establishment from the MM connection, suspend any further message to be sent and await the completion of the re-establishment procedure. Call Control (CC) is notified when the MM connection is re-established and then resumes transmission of possibly suspended messages and resumes user data exchange when an appropriate channel is available.

The GSM cell to be used for call re-establishment is selected according to the rules introduced in 3GPP specification TS 45.008. In the event of a radio link failure, call re-establishment may be attempted (according to the procedure in 3GPP TS 44.018). The MS performs a predetermined algorithm to determine which cell to use for the call re-establishment attempt. The MS is under no circumstances allowed to access a cell to attempt call re-establishment later than 20 seconds after the detection within the MS of the radio link failure causing the call re-establishment attempt. In a case where the 20 seconds elapse without a successful call re-establishment, the call re-establishment attempt will be abandoned.

In the event of an abnormal release with cell reselection (see 3GPP specification TS 44.060), an abnormal cell reselection based on BA(GPRS) is attempted. The MS determines which cell to be used for this cell reselection attempt according to rules introduced in 3GPP specification 45.008. Again, the MS is under no circumstances allowed to access a cell to attempt abnormal cell reselection later than 20 seconds after the detection within the MS of the abnormal release causing the abnormal cell reselection attempt. In the case where the 20 seconds elapses without a successful abnormal cell reselection the attempt shall be abandoned.

UMA consortium Stage 3 specification introduces a field 'RE' in the information element (IE) Control Channel Description of UMA. This field defines whether call re-establishment is allowed in the UMA cell or not. The MS receives this UMA Control Channel Description as a mandatory element in message URR REGISTER ACCEPT from the UMA network controller (UNC) during UMA registration.

URR message REGISTER ACCEPT has an optional UMA information element Cell Description that defines ARFCN (Absolute Radio Frequency Carrier Number) and BSIC (Base Station Identity Code) of this UMA cell. Existence of this information element is a condition for the serving UMA cell reporting to the GERAN. Without optional field Cell Description reporting of the serving UMA cell is not possible, which means that GSM-to-UMA handover or GSM-to-UMA packet cell change order (PCCO) is not possible.

The MS uses the (Source-RAT) measurement report procedure to "request" handover to UMAN for voice call or signalling sessions. This procedure is initiated after UMA RR has successfully registered with UNC.

However, problems occur when the MS in GSM dedicated mode is registered to the UNC, i.e. URR is in URR-REGISTERED state, but the UNC does not provide UMA Cell Description in URR REGISTER ACCEPT and the MS is losing GSM RR connection due to radio link timeout. A GSM-to-UMA handover is out of question because the serving UMA cell cannot be referred in measurement reporting. If call re-establishment in GSM is not possible or fails, the MS shall loose the ongoing CS connection. But if the serving UMA cell supported call-reestablishment, the MS could in principle initiate rove-in (i.e. access the UMA) to the serving UMA cell in this case and start call re-establishment via the UMA cell and resume the connection through URR protocol.

The above problem also occurs if the UMA ARFCN and BSIC matches one of the ARFCN and BSIC combinations from the GSM neighbour cell list. Also in this case the UMA cell will not be reported to network in the measurements report and handover from GSM to UMA (or PCCO) is not possible.

It is also possible that the GERAN does not command handover or PCCO to UMAN even if an UMA cell has been reported.

In TS 44.060 several timers are specified for RLC/MAC (radio Link Control / Medium Access Control) protocol signaling used for controlling abnormal release procedure. If access in another cell is allowed and the MS is not in dedicated mode of a CS connection, the MS aborts all Temporary Block Flows (TBFs) in progress and return to packet idle mode. The MS performs an abnormal cell reselection (cf. 3GPP TS 45.008) and initiates establishment of an uplink TBF, using the procedures on Common Control Channel (CCCH) or Packet Common Control Channel (PCCCH) on the new cell. The MS will not reselect back to the original cell for a predetermined time period if another suitable cell is available.

If the abnormal cell reselection is abandoned (cf. 3GPP TS 45.008), the MS reports an RLC/MAC failure to upper layers. If the mobile station remains in the cell where the abnormal release occurred, Discontinuous Reception (DRX) mode procedures are applied. Thus, packet switched (PS) data call fails and mobile shall start new cell selection.

US 5 930 712 discloses a dual mode terminal, in which a mobile station of a mobile radio system and cordless telephone are combined. This kind of terminal can have a connection with both a base station of the mobile radio system and a base station (fixed part) of the cordless telephone system. A call re-establishment procedure is utilized for inter-system handovers between a cordless telephone system having terminal-initiated handovers and the supporting mobile radio system having network-initiated handovers.

US 2002/0049073 A1 discloses a wireless communication device for establishing communication with a remote terminal device through a cordless or a mobile base station. The wireless communication device has a cordless section and a mobile section. The cordless section is for communicating with a remote terminal device through the cordless base station in a cordless mode used for a cordless call. The mobile section is for communicating with the remote terminal device through the mobile base station in a mobile mode used for a mobile call. A processor of the wireless communication device detects a drop of a current call using the cordless service, for example, and re-establishes the communication using the mobile service. The user may be prompted prior to call re-establishment. For outgoing calls, the last dialled number is stored and re-dialled for call re-establishment. For incoming calls, the caller ID is used for call re-establishment.

### SUMMARY OF THE INVENTION

It is therefore an object of the present invention to provide an improved method and terminal device for call re-establishment or cell reselection due to abnormal release, by means of which connection failures can be prevented when UMA coverage is available.

This object is achieved by a method of re-establishing a CS call or PS connection in a data network comprising at least a first access network and a second access network, said method comprising the steps of:
- detecting a failure of a CS call or PS connection established via said first access network;
- receiving an indication whether said second access network support call re-establishment ;
- checking whether registration to said second access network is given;
- selecting a new serving cell of said second access network; and
- initiating connection re-establishment via said second access network in response to the result of said checking step, if a failure has been detected in said detecting step.

Furthermore, the above object is achieved by a terminal device for providing access to a first access network and a second access network, said terminal device comprising:
- detecting means for detecting a failure of a CS call or PS connection established via said first access network;
- receiving means for receiving an indication whether said second access network supports call re-establishment ;
- checking means for checking registration to said second access network; and
- selecting means for selecting a new serving cell of said second access network; and
- signaling control means for initiating connection re-establishment via said second access network in response to the output of said detecting means and the result of said checking means.

Accordingly, a new option is provided for MSs supporting a second access network, e.g. an wireless unlicensed access network such as UMAN, to avoid connection failures in the first access network, e.g. a wireless licensed access network such as a GSM or GPRS network, when coverage of the second access network is available, especially where call re-establishment via the first access network is not allowed. The basic idea is to allow the MS to use another access system cell as a cell reselection candidate either due to call re-establishment or due to abnormal release with cell reselection. The proposed solution improves user experience e.g. in border areas between the two access networks where the second access network is available, as the connection drop will be shorter due to the fact that the MS may chose a serving cell of the second access network through the all re-establishment procedure. Moreover, implementation of this solution does not cause any changes to existing call re-establishment procedures of core networks.

Furthermore, user experience with PS calls or connections can be improved if rove-in to the new serving cell of the second access network could take precedence over cell selection of the first access network after abnormal release and cell reselection failure.

The initiation of re-establishment may comprise initiating a rove-in procedure to a new serving cell of the second access network. This rove-in procedure may be prioritized over cell selection of the first access network after abnormal release and cell reselection failure.

Additionally, the first access network may comprise a wireless licensed access network and the second access network may comprise a wireless unlicensed access network. The call may be a packet switched call or connection. Then, the first access network may comprise a GERAN and the second access network may comprise a UMAN. Alternatively, the call may be a circuit switched call. Then, the first access network may comprise a GSM network and the second access network may comprise a UMAN.

Furthermore, a checking step may be provided for checking whether the second access network supports call re-establishment.

The solution may be implemented as a computer program product comprising code means adapted to produce the above method steps when run on a computer device. This computer program product may be distributed on a computer readable medium or via a downloading process from a data network.

Further advantageous modifications are defined in the dependent claims.

### BRIEF DESCRIPTION OF THE DRAWINGS

The present invention will now be described based on a embodiments with reference to the accompanying drawings in which:
Fig. 1 shows a schematic signaling and processing diagram of a re-establishment procedure of a circuit switched call, according to a first embodiment;
Fig. 2 shows a schematic block diagram of a terminal device according to the embodiments; and
Fig. 3 shows a schematic signaling and processing diagram of a re-establishment procedure of a packet switched call, according to a first embodiment.

### DESCRIPTION OF PREFERRED EMBODIMENTS

In the following, embodiments of the present invention will be described in connection with a call re-establishment procedure in a combined UMA and GSM coverage area.

According to the embodiments, a new choice to recover from GSM radio link failure is introduced in cases where GSM call re-establishment and GSM-to-UMA handover are not possible or has not been performed but the MS has been already registered to the UMAN. The basic idea is to allow for the MS to also use the UMA cell for call re-establishment in the situation where call re-establishment criteria are fulfilled and the MS is registered in UMA.

The call re-establishment idea is however not restricted to interworking between GSM and UMA systems. Systems other than UMA could be used as well as transmission media for this core network call re-establishment procedure.

The proposed procedure could be extended to be applied also for recovering from packet data transfer failure when (abnormal) cell reselection to another GSM cell is not possible. Then, the MS could initiate rove-in to the new serving UMA cell and initiate packet connection establishment on the UMA side instead of indicating failure to CN.

Using the proposed procedure, the MS can change from GSM to UMA during CS connection and avoid drop of the CS call even if the UMA cells in the area are not supporting GSM-to-UMA handover. Any mobile manufacturer who implements UMA benefit from the avoidance of CS call and PS call or connection drop-outs in GSM-UMA border areas.

An implementation on the mobile side requires changes in 3GPP specification TS 44.018 to the extent that it needs to be specified that a MS supporting UMA may initiate rove-in to the new serving UMA cell for call re-establishment purpose in case GSM radio link timeout occurs. Furthermore, additional changes are required in 3GPP specification TS 45.008 to allow for the MS to also utilize the UMA cell to be chosen when determining which cell to use for the call re-establishment attempt. To extend the invention to packet switched call cases, the change in TS 45.008 would concern serving UMA cell use with abnormal cell reselection procedure.

Another preferred way of implementation could be to add a new rove-in condition. This could be done as follows:
On entering UMA coverage and when in GPRS NC2 mode, the MS always obeys to the GERAN network i.e. it does not execute the rove-in procedure on its own. When not in GPRS NC2 mode, the MS may choose to join an access point (AP) depending on user preferences and service provider configuration. Following UMAN discovery, the MS shall initiate registration with the UMAN.

Additionally, rove-in may be caused due to a call re-establishment procedure in GERAN, and for GPRS due to abnormal release with reselection. Following successful registration, the MS switches to UMA mode wherein the serving RR entity is UMA-RR. UMA-RR reports the appropriate system information received following successful registration from the serving UNC, to the NAS layers. GSM-RR is then detached from the RR-SAP.

Since it is detached from the NAS and not serving upper layers, the GSM-RR does not inform the MM layer about any cell re-selection and/or change of system information of the current camping cell. Also, any detection of a newly found GSM PLMN will not trigger NAS to change selected PLMN. MM considers the UMA cell as the current serving cell. The GSM RR does not act on any received paging request message.

In particular, a new algorithm or an extension to the existing algorithm could be used by the MS to determine which cell to use for the call re-establishment attempt. When a radio link failure is detected by the MS, it performs a local end release on all signalling links. Then, the MS deactivates all dedicated channels. If the mobile station is supporting UMA and is registered to a UNC which supports call re-establishment, the MS may initiate rove-in to UMA and indicate GSM connection failure to the MM sublayer after entering to UMA mode. CN may then proceed with the specified call re-establishment activities..

An MS supporting inter-working with other RAN's (other than UMA) may choose a cell of another radio access network (RAN) if the cell of the other RAN is suitable and call re-establishment on the cell is allowed. In this connection, it may however not be allowed to attempt a cell of another RAN before call re-establishment in GERAN has been abandoned.

In the event of an abnormal release with cell reselection according to 3GPP specification TS 44.060, an abnormal cell reselection based on BA(GPRS) can be attempted. Then, if the MS supports UMA and is registered to the UMAN, it may start rove-in to the new serving UMA cell if a suitable GSM cell is not found according to the algorithms specified in TS 45.008.

In case the MS supports access to other RAN or other system, the MS may perform cell reselection also to other system to recover from the abnormal release encountered.

In the following, specific examples of re-establishment procedures for CS and PS calls are described in connection with the respective first and second embodiments.

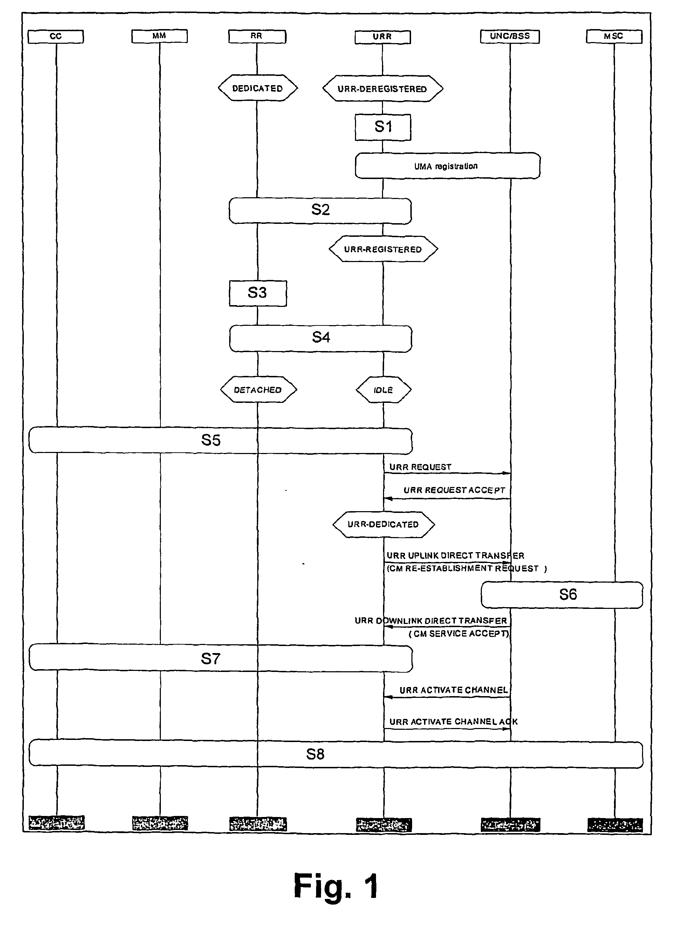

Fig. 1 shows a schematic signaling and processing diagram for re-establishment of a CS call, according to the first preferred embodiment and based on the above 3GPP specifications.

In step S1, URR finds a BT/WLAN base station and joins to it. After UMA registration procedure between URR and UMA Network Controller (UNC),reporting the UMA cell to (Base Station Subsystem) BSS is not possible due to the fact that the UMA cell ARFCN and BSIC are not available. The MS may have reported the serving UMA cell to the BSS but the BSS has not commanded handover to UMAN. The URR indicates in step S2 to RR whether the UMA cell supports call re-establishment.

After URR registration, the GSM RR connection is going to fail due to radio link timeout (step S3), and a rove-in procedure to the UMAN is initiated because the serving UMA cell is supporting call re-establishment (step S4). Then, RR becomes inactive and URR enters to URR-IDLE state. In step S5, MM and CC are informed about GSM connection failure, and CC allows and MM initiates call re-establishment through the UMAN. After a CM RE-ESTABLISHMENT REQUEST message is sent to the network, the UNC of the UMAN and the MSC (Mobile Switching Center) of the GSM network are connected in step S6. Thus, the re-establishment request ends up to the MSC (Mobile Switching Center), while the URR protocol is just used as a transmission media for that purpose. After URR uplink and downlink direct transfers have been acknowledged, CM service acceptance is indicated to MM in step S7. Thereafter, URR channel activation is agreed and the CS call is resumed in step S8.

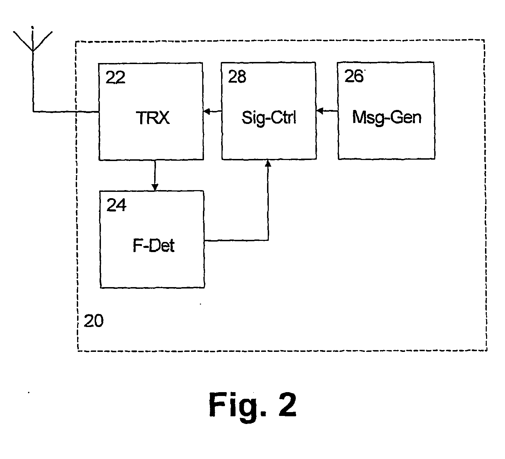

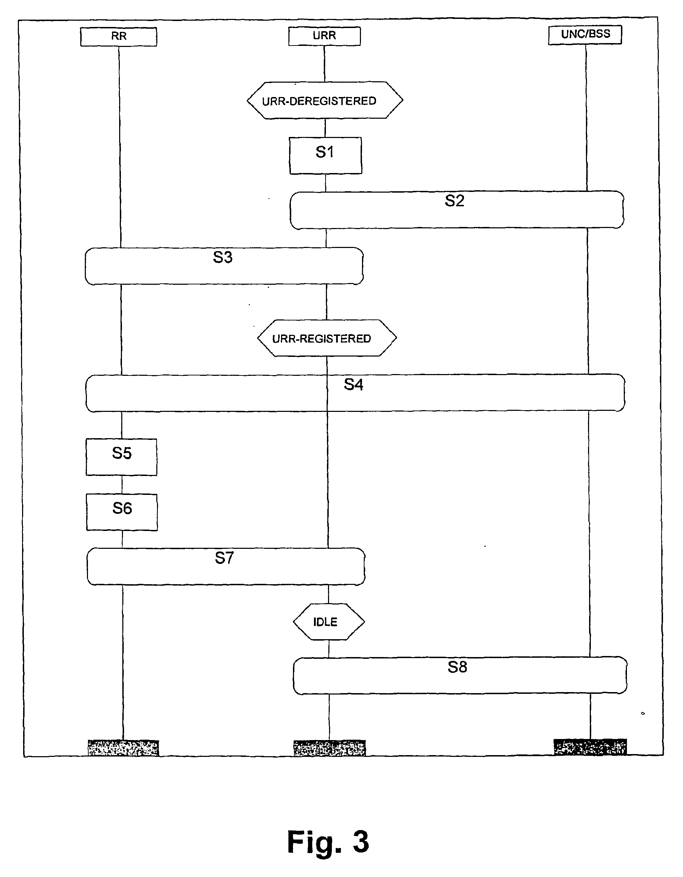

Fig. 2 shows a schematic block diagram of a terminal device, e.g. mobile phone, in which the proposed call re-establishment functionality according to the preferred embodiments is implemented. Signaling data is transmitted and received by a transceiver unit 22 which is controlled by a signaling control unit 28 so as to transmit signaling messages, e.g. URR messages, generated by a message generation function or unit 26. This message generating unit 26 also generates URR REQUEST message to be transmitted to the UMAN. Furthermore, a failure detection function or unit 24 is provided which detects a GSM RR connection failure situation e.g. based on a radio link timeout. In response to the detection of the failure situation, the failure detection unit 24 controls the signaling control unit 28 to initiate a rove-in procedure if the serving UMA cell supports call re-establishment. If call-re-establishment is allowed by CC, it is initiated by MM and the URR REQUEST message is transmitted to the UMA network via the transceiver 22. Fig. 3 shows another schematic signaling and processing diagram for re-establishment of a PS call or connection, according to the second preferred embodiment and based on the above 3GPP specifications.

In step S1, URR finds a BT/WLAN base station, joins to it. UMA registration procedure between URR and UMA Network Controller (UNC) is performed in step S2. The URR indicates in step S3 to RRwhether the UMA cell supports call re-establishment.

After URR registration, packet data transfer is starting (step S4). Reporting the UMA cell to (Base Station Subsystem) BSS is not possible in Step 4 due to the fact that the UMA cell ARFCN and BSIC are not available. Even if the UMA cell ARFCN and BSIC are available, it may happen that the MS may have reported the serving UMA cell to the BSS but the BSS has not commanded PCCO to UMAN.

In step S5, the failure detection unit 24 of the MS recognizes that uplink packet data transfer fails. Moreover, in step S6 abnormal release with cell reselection according to TS 45.008 also fails. In response thereto, the signaling control unit 28 initiates a rove-in procedure to the UMAN step S7) and URR becomes the active RR entity.. Finally, in step S8, the PS data transfer is resumed through the UMAN.

In summary, a terminal device and method of re-establishing a call or connection in a data network comprising at least a first access network and a second access network has been described, wherein a failure of a call or connection established via the first access network is detected at the terminal device and call or connection re-establishment is initiated via the second access network in response to the result of checking registration to the second access network, if a failure has been detected. Thereby, a new option is provided to avoid connection failures when coverage to another access network is available, especially where call re-establishment via the first access network is not allowed.

It is noted that the functions or units of the terminal device 20 as shown in Fig. 2 may be implemented as software routines which are configured to run a computer device or processor device provided in the terminal device 20. As an alternative, the units or function as indicated by the blocks of Fig. 2 may be implemented as discrete hardware circuits.

Furthermore, it is to be noted that the present invention is not restricted to the above embodiment and can be implemented in any terminal device or other wireless communication device connected to a network supporting a call re-establishment procedure. In particular, any interworking between cellular network(s) and any other access systems besides UMA and WLAN is intended to be covered. Moreover, any kind of access procedure could be used depending on the cellular access network re-establishing the call via the unlicensed access network after failure. The embodiments may thus vary within the scope of the attached claims

## Claims

1. A method of re-establishing a circuit switched call or a packet switched connection in a data network comprising at least a first access network and a second access network, said method comprising:
detecting a failure of said circuit switched call or said packet switched connection established via said first access network;
receiving an indication whether said second access network supports call re-establishment;
checking whether registration to said second access network is given;
selecting a new serving cell of said second access network; and
initiating connection re-establishment via said second access network in response to the result of said checking step, if a failure has been detected in said detecting step.

2. A method according to claim 1, wherein said initiating step comprises the step of initiating a rove-in procedure to a new serving cell of said second access network.

3. A method according to claim 2, wherein said rove-in procedure is prioritized over cell selection of said first access network after abnormal release and cell reselection failure.

4. A method according to claim 2 or 3, wherein said rove-in procedure is caused due to a call re-establishment procedure in GERAN or due to abnormal release with reselection in GPRS.

5. A method according to any one of the preceding claims, wherein said first access network comprises a wireless licensed access network and said second access network comprises a wireless unlicensed access network.

6. A method according to any one of the preceding claims, wherein said call is a packet switched call or connection.

7. A method according to claim 6, wherein said first access network comprises a GERAN and said second access network comprises a UMAN.

8. A method according to any one of claims 1 to 5, wherein said call is a circuit switched call.

9. A method according to claim 8, wherein said first access network comprises a GSM network and said second access network comprises a UMAN.

10. A method according to any one of the preceding claims, further comprising the step of checking whether said second access network supports call re-establishment.

11. A computer program product comprising code means adapted to produce the steps of any one of method claims 1 to 10 when run on a computer device.

12. A terminal device for providing access to a first access network and a second access network, said terminal device (20) comprising:
detecting means (24) for detecting a failure of a circuit switched call or a packet switched connection established via said first access network;
receiving means (22) for receiving an indication whether said second access network supports call re-establishment;
checking means (28) for checking registration to said second access network;
selecting means (28) for selecting a new serving cell of said second access network; and
signaling control means (28) for initiating connection re-establishment via said second access network in response to the output of said detecting means (24) and the result of said checking means (28).

13. A terminal device according to claim 12, wherein said signaling control means (28) are configured to initiate a rove-in procedure to a new serving cell of said second access network.

14. A terminal device according to claim 13, wherein said signaling control means (28) are configured to prioritize said rove-in procedure over cell selection of said first access network after abnormal release and cell reselection failure

15. A terminal device according to any one of claims 12 to 14, wherein said first access network comprises a wireless licensed access network and said second access network comprises a wireless unlicensed access network.

16. A terminal device according to any one of claims 12 to 15, wherein said call is a packet switched call or connection.

17. A terminal device according to claim 16, wherein said first access network comprises a GERAN and said second access network comprises a UMAN.

18. A terminal device according to any one of claims 12 to 15, wherein said call is a circuit switched call.

19. A terminal device according to claim 18, wherein said first access network comprises a GSM network and said second access network comprises a UMAN.

20. A terminal device according to any one of claims 12 to 19, wherein said signaling control means (28) are configured to check whether said second access network supports call re-establishment.

## Patentansprüche

1. Verfahren zum Wiederherstellen eines leitungsvermittelten Rufes oder einer paketvermittelten Verbindung in einem Datennetz, das wenigstens ein erstes Zugangsnetz und ein zweites Zugangsnetz umfasst, wobei das Verfahren umfasst:
Detektieren eines Funktionsfehlers des leitungsvermittelten Rufes oder der paketvermittelten Verbindung, die über das erste Zugangsnetz hergestellt sind;
Empfangen einer Anzeige, ob das zweite Zugangsnetz eine Rufwiederherstellung unterstützt;
Prüfen, ob eine Registrierung für das zweite Zugangsnetz vorliegt;
Auswählen einer neuen bedienenden Zelle des zweiten Zugangsnetzes; und
Anregen einer Verbindungswiederherstellung über das zweite Zugangsnetz in Reaktion auf das Ergebnis des Prüfungsschrittes, wenn im Detektionsschritt eine Fehlfunktion detektiert worden ist.

2. Verfahren nach Anspruch 1, wobei der Anregungsschritt den Schritt des Anregens einer Rove-in-Prozedur zu einer bedienenden Zelle des zweiten Zugangsnetzes umfasst.

3. Verfahren nach Anspruch 2, wobei die Rove-in-Prozedur höhere Priorität aufweist als die Zellenwahl des ersten Zugangsnetzes nach einer anormalen Trennung und einer Zellenwiederwahl-Fehlfunktion.

4. Verfahren nach Anspruch 2 oder 3, wobei die Rove-in-Prozedur aufgrund einer Rufwiederherstellungsprozedur in GERAN oder aufgrund einer anormalen Trennung mit Wiederwahl in GPRS ausgelöst wird.

5. Verfahren nach irgendeinem der vorangehenden Ansprüche, wobei das erste Zugangsnetz ein drahtloses lizensiertes Zugangsnetz umfasst und das zweite Zugangsnetz ein drahtloses unlizensiertes Zugangsnetz umfasst.

6. Verfahren nach irgendeinem der vorangehenden Ansprüche, wobei der Ruf ein Ruf oder eine Verbindung in Paketvermittlung ist.

7. Verfahren nach Anspruch 6, wobei das erste Zugangsnetz ein GERAN umfasst und das zweite Zugangsnetz ein UMAN umfasst.

8. Verfahren nach irgendeinem der Ansprüche 1 bis 5, wobei der Ruf ein leitungsvermittelter Ruf ist.

9. Verfahren nach Anspruch 8, wobei das erste Zugangsnetz ein GSM-Netz umfasst und das zweite Zugangsnetz ein UMAN umfasst.

10. Verfahren nach irgendeinem der vorangehenden Ansprüche, ferner den Schritt des Prüfens umfassend, ob das zweite Zugangsnetz Rufwiederherstellung unterstützt.

11. Computerprogrammprodukt, das Code-Mittel umfasst, die dafür ausgelegt sind, die Schritte irgendeines der Verfahrensansprüche 1 bis 10 zu bewirken, wenn sie auf einer Computervorrichtung ausgeführt werden.

12. Endgerät zum Bereitstellen von Zugang zu einem ersten Zugangsnetz und einem zweien Zugangsnetz, wobei das Endgerät (20) umfasst:
Detektionsmittel (24) zum Detektieren einer Fehlfunktion eines leitungsvermittelten Rufes oder einer paketvermittelten Verbindung, die über das erste Zugangsnetz hergestellt sind;
Empfangsmittel (22) zum Empfangen einer Anzeige, ob das zweite Zugangsnetz Rufwiederherstellung unterstützt;
Prüfmittel (28) zum Prüfen einer Registrierung für das zweite Zugangsnetz;
Wählmittel (28) zum Wählen einer neuen bedienenden Zelle des zweiten Zugangsnetzes; und
Signalisierungssteuermittel (28) zum Anregen einer Verbindungswiederherstellung über das zweite Zugangsnetz in Reaktion auf die Ausgabe der Detektionsmittel (24) und das Ergebnis der Prüfmittel (28).

13. Endgerät nach Anspruch 12, wobei die Signalisierungssteuermittel (28) dafür konfiguriert sind, eine Rove-in-Prozedur zu einer neuen bedienenden Zelle des zweiten Zugangsnetzes anzuregen.

14. Endgerät nach Anspruch 13, wobei die Signalisierungssteuermittel (28) dafür konfiguriert sind, der Rove-in-Prozedur eine höhere Priorität zuzuweisen als der Zellenwahl des ersten Zugangsnetzes nach einer anormalen Trennung und einer Zellenwiederwahl-Fehlfunktion.

15. Endgerät nach irgendeinem der Ansprüche 12 bis 14, wobei das erste Zugangsnetz ein drahtloses lizensiertes Zugangsnetz umfasst und das zweite Zugangsnetz ein drahtloses unlizensiertes Zugangsnetz umfasst.

16. Endgerät nach irgendeinem der Ansprüche 12 bis 15, wobei der Ruf ein Ruf oder eine Verbindung in Paketvermittlung ist.

17. Endgerät nach Anspruch 16, wobei das erste Zugangsnetz ein GERAN umfasst und das zweite Zugangsnetz ein UMAN umfasst.

18. Endgerät nach irgendeinem der Ansprüche 12 bis 15, wobei der Ruf ein leitungsvermittelter Ruf ist.

19. Endgerät nach Anspruch 18, wobei das erste Zugangsnetz ein GSM-Netz umfasst und das zweite Zugangsnetz ein UAMN umfasst.

20. Endgerät nach irgendeinem der Ansprüche 12 bis 19, wobei die Signalisierungssteuermittel (28) dafür konfiguriert sind, zu prüfen, ob das zweite Zugangsnetz Anrufwiederherstellung unterstützt.

## Revendications

1. Procédé destiné à rétablir un appel à commutation de circuits ou une connexion à commutation de paquets dans un réseau de données comprenant au moins un premier réseau d'accès et un second réseau d'accès, ledit procédé comprenant les étapes ci-dessous consistant à :
détecter une défaillance dudit appel à commutation de circuits ou de ladite connexion à commutation de paquets établi(e) via ledit premier réseau d'accès ;
recevoir une indication selon laquelle ledit second réseau d'accès prend en charge un rétablissement d'appel ;
vérifier si un enregistrement sur ledit second réseau d'accès est donné ;
sélectionner une nouvelle cellule de desserte dudit second réseau d'accès ; et
initier un rétablissement de connexion via ledit second réseau d'accès en réponse au résultat de ladite étape de vérification, si une défaillance a été détectée lors de ladite étape de détection.

2. Procédé selon la revendication 1, dans lequel ladite étape d'initiation comprend l'étape consistant à initier une procédure de commutation vers une nouvelle cellule de desserte dudit second réseau d'accès.

3. Procédé selon la revendication 2, dans lequel ladite procédure de commutation est prioritaire par rapport à une sélection de cellule dudit premier réseau d'accès à l'issue d'une libération anormale et d'une défaillance de resélection de cellule.

4. Procédé selon la revendication 2 ou 3, dans lequel ladite procédure de commutation est occasionnée par une procédure de rétablissement d'appel dans un réseau GERAN ou par une libération anormale avec resélection dans un service GPRS.

5. Procédé selon l'une quelconque des revendications précédentes, dans lequel ledit premier réseau d'accès comprend un réseau d'accès sous licence sans fil et ledit second réseau d'accès comprend un réseau d'accès sans licence sans fil.

6. Procédé selon l'une quelconque des revendications précédentes, dans lequel ledit appel est une connexion ou un appel à commutation de paquets.

7. Procédé selon la revendication 6, dans lequel ledit premier réseau d'accès comprend un réseau GERAN et ledit second réseau d'accès comprend un réseau UMAN.

8. Procédé selon l'une quelconque des revendications 1 à 5, dans lequel ledit appel est un appel à commutation de circuits.

9. Procédé selon la revendication 8, dans lequel ledit premier réseau d'accès comprend un réseau GSM et ledit second réseau d'accès comprend un réseau UMAN.

10. Procédé selon l'une quelconque des revendications précédentes, comprenant en outre l'étape consistant à vérifier si ledit second réseau d'accès prend en charge un rétablissement d'appel.

11. Produit-programme informatique comprenant des moyens de code aptes à mettre en oeuvre les étapes selon l'une quelconque des revendications de procédé 1 à 10 lorsqu'il est exécuté sur un dispositif informatique.

12. Dispositif terminal destiné à fournir un accès à un premier réseau d'accès et à un second réseau d'accès, ledit dispositif terminal (20) comprenant :
des moyens de détection (24) pour détecter une défaillance d'un appel à commutation de circuits ou d'une connexion à commutation de paquets établi(e) via ledit premier réseau d' accès ;
des moyens de réception (22) pour recevoir une indication selon laquelle ledit second réseau d'accès prend en charge un rétablissement d'appel ;
des moyens de vérification (28) pour vérifier un enregistrement auprès dudit second réseau d'accès ;
des moyens de sélection (28) pour sélectionner une nouvelle cellule de desserte dudit second réseau d'accès ; et
des moyens de commande de signalisation (28) pour initier un rétablissement de connexion via ledit second réseau d'accès en réponse à la sortie dudit moyen de détection (24) et du résultat dudit moyen de vérification (28).

13. Dispositif terminal selon la revendication 12, dans lequel lesdits moyens de commande de signalisation (28) sont configurés pour initier une procédure de commutation vers une nouvelle cellule de desserte dudit second réseau d'accès.

14. Dispositif terminal selon la revendication 13, dans lequel lesdits moyens de commande de signalisation (28) sont configurés pour donner la priorité à ladite procédure de commutation par rapport à une sélection de cellule dudit premier réseau d'accès à l'issue d'une libération anormale et d'une défaillance de resélection de cellule.

15. Dispositif terminal selon l'une quelconque des revendications 12 à 14, dans lequel ledit premier réseau d'accès comprend un réseau d'accès sous licence sans fil et ledit second réseau d'accès comprend un réseau d'accès sans licence sans fil.

16. Dispositif terminal selon l'une quelconque des revendications 12 à 15, dans lequel ledit appel est une connexion ou un appel à commutation de paquets.

17. Dispositif terminal selon la revendication 16, dans lequel ledit premier réseau d'accès comprend un réseau GERAN et ledit second réseau d'accès comprend un réseau UMAN.

18. Dispositif terminal selon l'une quelconque des revendications 12 à 15, dans lequel ledit appel est un appel à commutation de circuits.

19. Dispositif terminal selon la revendication 18, dans lequel ledit premier réseau d'accès comprend un réseau GSM et ledit second réseau d'accès comprend un réseau UMAN.

20. Dispositif terminal selon l'une quelconque des revendications 12 à 19, dans lequel lesdits moyens de commande de signalisation (28) sont configurés pour vérifier si ledit second réseau d'accès prend en charge un rétablissement d'appel.
